(19) Europäisches Patentamt / European Patent Office / Office européen des brevets

(11) **EP 2 995 593 B1**

(12) **EUROPEAN PATENT SPECIFICATION**

(45) Date of publication and mention
of the grant of the patent:
**05.09.2018 Bulletin 2018/36**

(51) Int Cl.:
*C03B 5/187* (2006.01)　　*F27D 27/00* (2010.01)
*B01F 7/00* (2006.01)　　*F27D 3/00* (2006.01)

(21) Application number: **14794543.0**

(86) International application number:
**PCT/JP2014/061911**

(22) Date of filing: **28.04.2014**

(87) International publication number:
**WO 2014/181732 (13.11.2014 Gazette 2014/46)**

(54) **STIRRING DEVICE FOR MOLTEN GLASS**

RÜHRVORRICHTUNG FÜR GLASSCHMELZE

DISPOSITIF D'AGITATION POUR VERRE FONDU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **08.05.2013 JP 2013098233**

(43) Date of publication of application:
**16.03.2016 Bulletin 2016/11**

(73) Proprietor: **Asahi Glass Company, Limited
Tokyo 100-8405 (JP)**

(72) Inventor: **HIROSE Motoyuki
Tokyo 100-8405 (JP)**

(74) Representative: **Müller-Boré & Partner
Patentanwälte PartG mbB
Friedenheimer Brücke 21
80639 München (DE)**

(56) References cited:
**EP-A1- 2 505 562　　WO-A1-2010/098328
WO-A1-2012/060372　　WO-A2-2008/101649
JP-A- 2010 100 462　　US-A- 2 831 664
US-A1- 2012 180 529**

**Description**

TECHNICAL FIELD

The present invention relates to a molten glass stirring device that stirs molten glass within a molten glass delivery tube for carrying molten glass, particularly a molten glass delivery tube with a high carrying amount of molten glass, for example, a sheet glass manufacturing apparatus for large-sized flat panel display (FPD).

BACKGROUND ART

For the purpose of improving homogeneity of molten glass, there has hitherto been adopted a way of installing a stirring device within a molten glass delivery tube for carrying molten glass and stirring the molten glass. The homogeneity of the molten glass largely affects transparency, thickness, etc. of a glass to be manufactured.

The stirring device is generally configured of a central axis as a rotation center and a stirring portion having stirring blades as installed in the circumference of the central axis.

In order to thoroughly homogenize the molten glass to be carried, it is needed to prevent so-called "slip-through" that is a phenomenon in which when the molten glass passing within a molten glass delivery tube is stirred by a stirring device, the molten glass slips through the inside of the stirring device. The molten glass before it is stirred by the stirring device contains a large quantity of so-called "heterogeneous glass" in which components of glass are not thoroughly homogenized on the occasion of being melted by a melting apparatus, or contains a large quantity of so-called "heterogeneous component" that has become a component different from the components of molten glass due to a reaction with a brick constituting the melting apparatus or molten glass delivery tube, or with a gas phase. In the case where such "heterogeneous glass" or "heterogeneous component" slips through the inside of the stirring device without being thoroughly homogenized, and the resulting molten glass is solidified to become a glass product, the "heterogeneous glass" or "heterogeneous component" becomes an opaque streak-like defect that is so-called ream. Namely, in order to homogenize the molten glass, it is needed to diffuse the heterogeneous component in the molten glass by suppressing the slip-through and thoroughly stirring the molten glass.

In Patent Document 1, for the purpose of reducing molten glass slipping through along a wall surface of a flow channel without being stirred, there is proposed a stirring device in which plural convexes are disposed on the outermost side of a stirring blade for narrowing a gap between the wall surface and the stirring blade. However, this stirring device is still poor in terms of suppression of slip-through in the vicinity of the wall surface of the flow channel.

As for a stirring device disclosed in Patent Document 2, it is described that for the purpose of improving homogeneity of molten glass, stirring blades to be installed in the circumference of a central axis are configured of long stirring blades having a different rotating radius and short stirring blades having a different rotating radius, each two or more of the long stirring blades and the short stirring blades being alternately installed. However, it may not be said that even this stirring device is sufficient in terms of an effect for suppressing slip-through in the vicinity of a wall surface of a flow channel.

WO 2008/101649 A2 describes an apparatus, which is suitable for being surrounded by molten glass, the apparatus having a shank which has at least one at least partially seamless tube consisting of an oxide dispersion-strengthened PGM material, the shank having at least one thickened portion on which an actuating device is arranged. US 2012/180529 A1 describes a further glass stirrer providing for improved stirring, reduced glass cord and easy adjustment of processing parameters during operation.

PRIOR ART REFERENCE

PATENT DOCUMENT

Patent Document 1: JP-A-2001-72426

Patent Document 2: JP-A-2003-63829A

SUMMARY OF THE INVENTION

PROBLEMS TO BE SOLVED BY THE INVENTION

In recent years, in particular, for glass substrates for large-sized FPD, glasses that are free from inclusion of unmelted raw materials and have high transparency and high flatness are required, and glasses that are less in defects and high in homogeneity have been demanded.

In addition, in glasses for applications requiring high transparency, for example, optical lenses, optical communication fibers, optical filters, substrates for solar cell, or fluorescent tubes, high homogeneity is required, too.

In the case where such extremely high homogeneity is required in such a way, in the conventional stirring devices, it has become difficult to obtain thorough homogeneity of the molten glass.

In order to solve the foregoing problem, an object of the present invention is to provide a glass stirring device which is capable of suppressing slip-through of molten glass within the stirring device, more specifically slip-through of molten glass in the vicinity of a wall surface of a delivery tube, and is also excellent in a stirring action of the molten glass within the molten glass delivery tube.

SOLUTION TO THE PROBLEMS

In order to achieve the above-described object, the present invention provides a molten glass stirring device that stirs molten glass, the molten glass stirring device including a rotatable central axis and a stirring portion provided on the central axis, wherein

the stirring portion includes a stirring blade, a long axis of which is orthogonal to the central axis, and which is composed of a plate-like body or a rod-like body whose vertical cross-sectional shape is any one of a circle, an ellipse, and a polygon, and a ring paddle having an annular shape, which is concentric with the central axis,

the stirring portion is provided with two or more stirring blades in the axial direction of the central axis and also provided with two or more stirring blades in the circumferential direction of the central axis, and

the stirring portion is provided with one or more ring paddles in the axial direction of the central axis.

In addition, in order to achieve the above-described object, the present invention preferably provides a molten glass stirring device that stirs molten glass within a molten glass delivery tube for carrying the molten glass having viscosity of 100 to 7,000 dPa·s at a carrying amount of 1 to 50 $m^3$/hr·S (S is a cross-sectional area of the delivery tube), the molten glass stirring device including a rotatable central axis and a stirring portion provided on the central axis, wherein

the stirring portion includes a stirring blade, a long axis of which is orthogonal to the central axis, and which is composed of a plate-like body or a rod-like body whose vertical cross-sectional shape is any one of a circle, an ellipse, and a polygon, and a ring paddle having an annular shape, which is concentric with the central axis, and which has a thickness in the circumferential direction of the central axis of 50 mm or less,

the stirring portion is provided with two or more stirring blades in the axial direction of the central axis and also provided with two or more stirring blades in the circumferential direction of the central axis,

the stirring portion is provided with one or more ring paddles in the axial direction of the central axis, and

when a maximum diameter of the stirring portion is defined as $D_1$ (mm), a diameter of the molten glass delivery tube in the site at which the stirring portion is placed is defined as $D_2$ (mm), and an outer diameter of the ring paddle is defined as $D_r$ (mm), the following formulae (1) and (2) are satisfied:

$$0.7 \times D_2 \leq D_1 \leq 0.98 \times D_2 \qquad (1)$$

$$0.8 \times D_1 \leq D_r \leq D_1 \qquad (2)$$

In addition, the present invention provides a sheet glass manufacturing apparatus including a sheet glass forming apparatus and a molten glass delivery tube provided between the glass melting apparatus and the sheet glass forming apparatus, wherein

the molten glass delivery tube is provided with at least one of the molten glass stirring devices according to the present invention.

In addition, the present invention provides a molten glass stirring method using the molten glass stirring device according to the present invention.

In addition, the present invention provides a sheet glass manufacturing method using the sheet glass manufacturing apparatus according to the present invention.

ADVANTAGEOUS EFFECTS OF THE INVENTION

The glass stirring device according to the present invention is capable of suppressing slip-through of the molten glass within the stirring device, more specifically slip-through of the molten glass in the vicinity of the wall surface of the molten glass delivery tube, is excellent in a stirring action of the molten glass within the molten glass delivery tube, and is excellent in homogeneity of the molten glass after stirring, and hence, it is possible to obtain a glass with high homogeneity, which is suitable particularly for glass substrates for large-sized FPD (for example, one side is 2 m or more) or the like. As a result, glasses that are free from inclusion of unmelted raw materials and have high transparency and high flatness are obtainable.

In addition, the glass stirring device according to the present invention is excellent in homogeneity of the molten glass after stirring, and hence, it is also suitable as a molten glass stirring device of a glass manufacturing apparatus of an application requiring high transparency or high optical homogeneity, for example, optical lenses, optical communication fibers, optical filters, substrates for solar cell, or fluorescent tubes. In addition, the glass stirring device according to the present invention is also suitable as a molten glass stirring device of a glass manufacturing apparatus for colored glass for decoration requiring high color tone homogeneity.

BRIEF DESCRIPTION OF THE DRAWINGS

FIG. 1 is a perspective view showing one configuration example of a molten glass stirring device according to the present invention.

FIG. 2 is a perspective view showing one configuration example of a molten glass stirring device of the background art.

FIG. 3 is a schematic view showing a behavior of a molten glass flow within a molten glass delivery tube having a molten glass stirring device 20 shown in FIG. 2 disposed therein.

FIG. 4 is a schematic view showing a behavior of a molten glass flow within a molten glass delivery tube having a molten glass stirring device 10 shown in FIG. 1 disposed therein.

FIG. 5 is a view showing a state where a molten glass stirring device 10 shown in FIG. 1 is disposed within a molten glass delivery tube.

FIG. 6 is a view the same as FIG. 5, provided that FIG. 6 is different from FIG. 5 with respect to the disposition of a ring paddle of the molten glass stirring device.

FIG. 7 is a view the same as FIG. 5, provided that FIG. 7 is different from FIG. 5 with respect to the disposition of a molten glass delivery tube.

FIG. 8 is a perspective view showing another configuration example of a molten glass stirring device according to the present invention.

FIG. 9 is a perspective view showing still another configuration example of a molten glass stirring device according to the present invention.

FIG. 10 is a perspective view showing still another configuration example of a molten glass stirring device according to the present invention.

FIG. 11 is a perspective view showing still another configuration example of a molten glass stirring device according to the present invention.

FIG. 12 is a perspective view showing still another configuration example of a molten glass stirring device according to the present invention.

FIG. 13 is a perspective view showing still another configuration example of a molten glass stirring device according to the present invention.

FIG. 14 is a perspective view showing still another configuration example of a molten glass stirring device according to the present invention.

FIG. 15 is a view showing a positional relationship between a stirring blade 23 and a wall surface of a molten glass delivery tube 100 in the case where a ring paddle is not provided among the Examples.

FIG. 16 is a view showing a positional relationship among a stirring blade 13, a ring paddle 14, and a wall surface of a molten glass delivery tube 100 in the case where a ring paddle is provided among the Examples.

FIG. 17 is a graph showing a relationship between a position in the tube diameter direction (tube diameter position) and a flow velocity distribution of a molten glass flow in the circumferential direction of a molten glass delivery tube in the configuration shown in FIG. 15.

FIG. 18 is a graph showing a relationship between a position in the tube diameter direction (tube diameter position) and a flow velocity distribution of a molten glass flow in the circumferential direction of a molten glass delivery tube in the configuration shown in FIG. 16.

FIG. 19 is a graph showing a relationship between a position in the tube diameter direction (tube diameter position) and a flow rate distribution of a molten glass flow in the axial direction of a molten glass delivery tube in the configuration shown in FIG. 15.

FIG. 20 is a graph showing a relationship between a position in the tube diameter direction (tube diameter position) and a flow rate distribution of a molten glass flow in the axial direction of a molten glass delivery tube in the configuration shown in FIG. 16.

FIG. 21 is a graph showing a relationship between r/R and a non-stirring region passing ratio in the configuration shown in FIG. 15.

FIG. 22 is a graph showing a relationship between r/R and a non-stirring region passing ratio in the configuration shown in FIG. 16.

FIG. 23 is a graph comparing a relationship between r/R and a non-stirring region passing ratio with respect to the configurations shown in FIG. 15 and FIG. 16, provided that the configuration shown in FIG. 15 is concerned with the device 20, and the configuration shown in FIG. 16 is concerned with the device 10.

MODES FOR CARRYING OUT THE INVENTION

The molten glass stirring device according to the present invention is hereunder explained by reference to the accompanying drawings.

In glass substrates for FPD, upsizing is being advanced year by year, and it is more and more required to produce large quantities of the glass substrates because of an increase of its demand. In equipment for manufacturing sheet glasses for FPD, it is required to increase a carrying amount of molten glass. In equipment for manufacturing glasses of an application, for example, optical lenses, optical communication fibers, optical filters, substrates for solar cell, or fluorescent tubes, it is also required to increase a carrying amount of molten glass.

As a method for increasing a carrying amount of molten glass within a molten glass delivery tube, there are exemplified a method for increasing a cross-sectional area of the molten glass delivery tube; and a method for increasing a flow velocity of the molten glass within the molten glass delivery tube.

However, an extreme increase of the cross-sectional area of the molten glass delivery tube is not preferred because the cost of equipment is increased. In addition, in the case of increasing the flow velocity of the molten glass within the molten glass delivery tube, slip-through of the molten glass within a stirring device is apt to be caused, and a stirring action of the molten glass is apt to be lowered.

It is preferred that the molten glass stirring device according to the present invention is placed within such a molten glass delivery tube with a high carrying amount of the molten glass and used. Specifically, molten glass having viscosity of 100 to 7,000 dPa·s, and preferably having viscosity of 200 to 6,000 dPa·s is placed within a molten glass delivery tube for carrying it in a carrying amount of 1 to 50 m$^3$/hr·S, and preferably a carrying amount of 2 to 50 m$^3$/hr·S (S is a cross-sectional area of the delivery tube) and used.

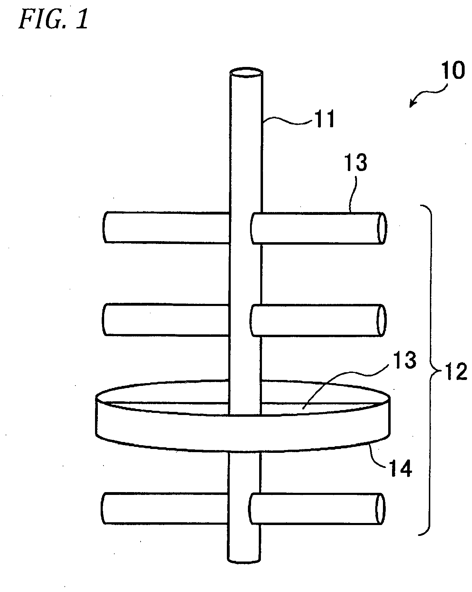

FIG. 1 is a perspective view showing one configuration example of a molten glass stirring device according to the present invention.

A molten glass stirring device 10 shown in FIG. 1 includes a rotatable central axis 11, and a stirring portion 12 is provided in a lower end portion of the central axis 11.

The stirring portion 12 is configured of a stirring blade 13 and a ring paddle 14.

In the stirring blade 13, a vertical cross-sectional shape thereof is composed of a circular rod-like body, and its long axis is orthogonal to the central axis 11. However, the stirring blade composed of a rod-like body is not limited thereto, and it may be one composed of a rod-like body in which a vertical cross-sectional shape thereof is an ellipse or a polygon, such a triangle, a quadrilateral, a hexagon, etc., and a long axis thereof is orthogonal to the central axis 11. It should be noted that the polygon as referred to herein also includes one having round corners (hereinafter the same in the present specification).

In addition, the stirring blade 13 may also be one composed of a plate-like body, in which a long axis thereof is orthogonal to the central axis 11. In the present specification, in the vertical cross-sectional shape of the stirring blade, of two axes passing through a center thereof and orthogonal to each other, in the case of defining the axis having a longer length as a long axis and the axis having a shorter length as a short axis, respectively, a body in which the length of the short axis is not more than 0.5 times the length of the long axis is designated as the "plate-like body", whereas a body in which the length of the short axis is more than 0.5 times the length of the long axis is designated as the "rod-like body". In the case where the stirring blade is a plate-like body, its vertical cross-sectional shape may take an ellipse or a polygon, such a triangle, a quadrilateral, a hexagon, etc.

Hereunder, in the present specification, of the axes included in the stirring blade composed of a rod-like body or a plate-like body, the axis orthogonal to the central axis 11 is designated as the long axis, and the axis orthogonal to the long axis is designated as the short axis. In consequence, there may be the case where a seeming relationship between the long axis and the short axis and a relationship between the long axis and the short axis in the present invention are reversed depending upon the shape of the stirring blade.

In the stirring portion 12, the stirring blade 13 bears a function to stir the molten glass. In order to improve the function to stir the molten glass, a plurality of the stirring blades 13 are provided in the stirring portion 12. Specifically, two or more stirring blades 13 are provided in the axial direction of the central axis 11, and two or more stirring blades are also provided in the circumferential direction of the central axis 11. It should be noted that in FIG. 1, four stirring blades 13 are provided in the axial direction of the central axis 11 at intervals in the vertical direction, and two stirring blades 13 are provided in the circumferential direction of the central axis 11 such that they are opposed to each other across the central axis 11. However, the number of the stirring blades 13 in the stirring portion 12 is not limited thereto, the number of the stirring blades in the axial direction of the central axis 11 may be 3 or less, or may be 5 or more. In addition, the number of the stirring blades in the circumferential direction of the central axis 11 may be 3 or more. However, when the number of the stirring blades 13 in the axial direction of the central axis 11 increases, torque necessary for rotating the stirring portion 12 increases, and hence, the number of the stirring blades 13 in the axial direction of the central axis 11 is preferably 8 or less. The number of the stirring blades in the circumferential direction of the central axis 11 is preferably 8 or less from the same reasons.

In the circumferential direction of the central axis 11, it is needed to dispose the two or more stirring blades at equal intervals to each other. When the intervals between the stirring blades are not an equal interval, there is a concern that the molten glass cannot be uniformly stirred. On the other hand, with respect to the axial direction of the central axis 11, the two or more stirring blades may be disposed at equal intervals to each other, or the mutual intervals may not be an equal interval.

In addition, when a distance between the two or more stirring blades provided in the axial direction of the central axis 11 is too small, there is a concern that the stirring action of the molten glass is lowered. For this reason, the distance between the two or more stirring blades provided in the axial direction of the central axis 11 is preferably 40 mm or more, more preferably 50 mm or more, and still more preferably 60 mm or more.

On the other hand, in the case where the distance between the two or more stirring blades provided in the axial direction of the central axis 11 is too large, the stirring action of the molten glass is lowered. For this reason, the distance between the two or more stirring blades provided in the axial direction of the central axis 11 is preferably 200 mm or less, more preferably 190 mm or less, and still more preferably 180 mm or less.

In the case where the stirring blade 13 is composed of a plate-like body, the stirring blade 13 can be disposed such that the short axis thereof is parallel to the central axis 11. In this case, the stirring blade 13 composed of a plate-like body is disposed in such a state that its vertical cross-section rises perpendicularly. In the case of taking such a disposition, a cross-sectional area of the stirring blade 13 against the rotational direction becomes maximum, whereby a larger shearing force can be given to the molten glass.

Meanwhile, the short axis of the stirring blade 13 composed of a plate-like body can be disposed inclined against the central axis 11. In the case of taking such a disposition, a stirring action can be given to the axial direction of the central axis 11. Thus, the flow of the molten glass becomes a more complicated flow, and there is a possibility that a homogenizing action is improved.

In the case of disposing the short axis of the stirring blade 13 composed of a plate-like body inclined against the central axis 11, an angle $\theta$ ($0° \leq \theta \leq 90°$) formed between the short axis of the stirring blade 13 composed of a plate-like body and the central axis 11 is preferably 60° or less, and more preferably 0° to 55°. It should be noted that in the case of disposing the short axis of the stirring blade 13 composed of a plate-like body parallel to the central axis 11, the angle formed between the short axis of the stirring blade 13 and the central axis 11 is 0°.

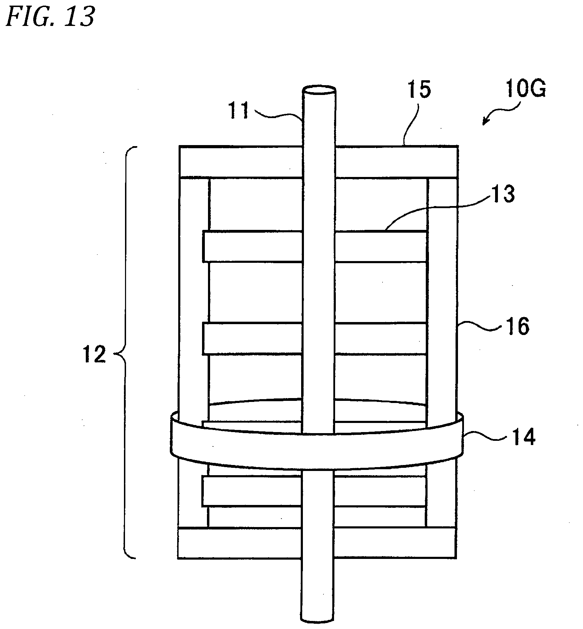

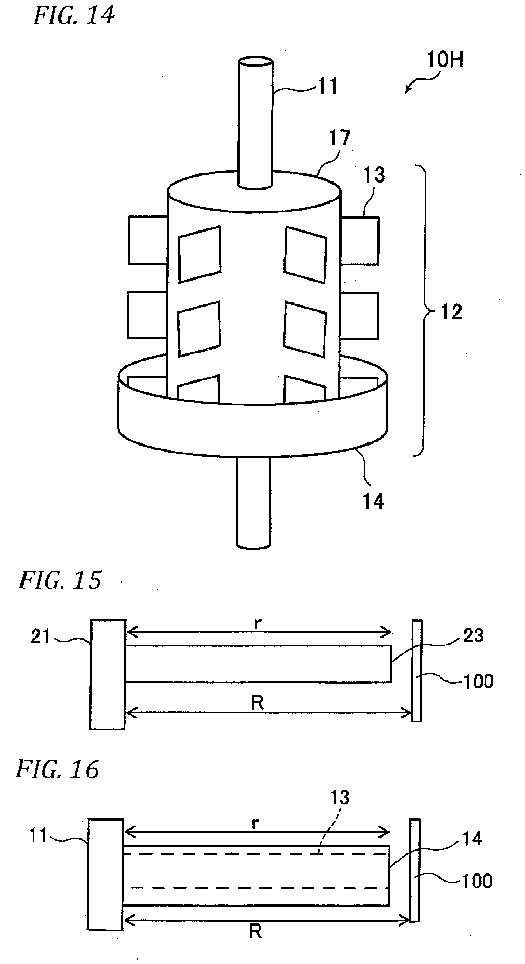

In addition, with respect to the stirring blade 13 composed of a plate-like body, in a molten glass stirring device 10G shown in FIG. 13 as described later and a molten glass stirring device 10H shown in FIG. 14 as described later, the stirring blade 13 composed of a plate-like body whose planar shape is a rectangle is shown; however, the planar shape of the stirring blade composed of a plate-like body may also be other square, such as a trapezoid, etc.

The ring paddle 14 has an annular shape and is concentric with the central axis 11. In the stirring device 10 according to the present invention, by providing the ring paddle 14 in the stirring portion 12, slip-through of the molten glass in the vicinity of a wall surface of the molten glass delivery tube is suppressed as described below.

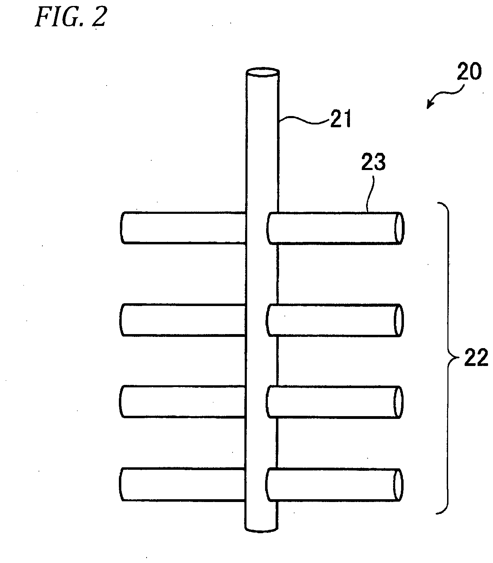

FIG. 2 is a perspective view showing one configuration example of a molten glass stirring device of the background art. A molten glass stirring device 20 shown in FIG. 2 is different from the molten glass stirring device 10 shown in FIG. 1 with respect to the fact that a ring paddle is not provided in the stirring portion 12. With respect to other configuration, the molten glass stirring device 20 is identical to the molten glass stirring device 10, and a stirring portion 22 is provided in a lower end portion of a rotatable central axis 21. The stirring portion 22 includes a stirring blade 23 composed of a rod-like body whose vertical cross-sectional shape is a circle.

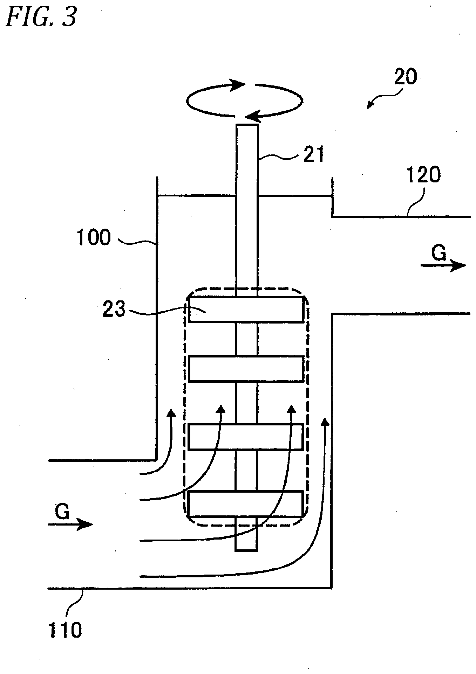

FIG. 3 is a schematic view showing a behavior of a molten glass flow within a molten glass delivery tube having the molten glass stirring device 20 shown in FIG. 2 disposed therein. In FIG. 3, the molten glass stirring device 20 is disposed within a main tube 100 of the molten glass delivery tube. Branch tubes 110 and 120 are connected to the upstream side and the downstream side of the main tube 100, respectively.

A molten glass G within the molten glass delivery tube is carried in the arrow direction in the drawing. At the time of passing of the molten glass, the central axis 21 of the molten glass stirring device 20 is rotated in the arrow direction. The stirring portion 22 which is provided in the lower end portion of the central axis 21 also rotates in the arrow direction due to the rotation of the central axis 21.

In the molten glass within the molten glass delivery tube, the molten glass passing through a stirring region (site shown by a broken line in the drawing) where the stirring portion 22 is disposed is homogenized due to a stirring action by the stirring portion 22. Meanwhile, with respect to the molten glass passing through a non-stirring region (site outside the broken line in the drawing) in the vicinity of the wall surface of the main tube 100 that is the molten glass delivery tube, slip-through of the molten glass occurs, so that it is not homogenized.

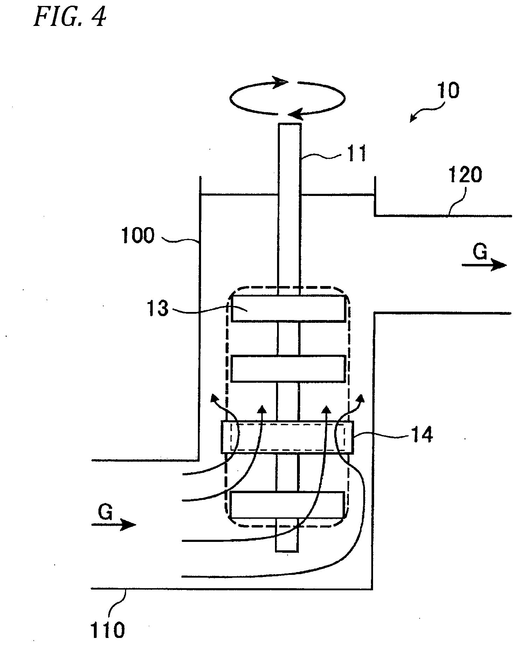

FIG. 4 is a schematic view showing a behavior of a molten glass flow within a molten glass delivery tube having the molten glass stirring device 10 shown in FIG. 1 disposed therein. In this case, a pressure loss is generated between the ring paddle 14 provided in the stirring portion 12 and the wall surface of the main tube 100, and hence, the molten glass passing through a non-stirring region (site outside a broken line in the drawing) in the vicinity of the wall surface of the main tube 100 is brought into a stirring region where the stirring portion 12 is provided, whereby slip-through of the molten glass is suppressed.

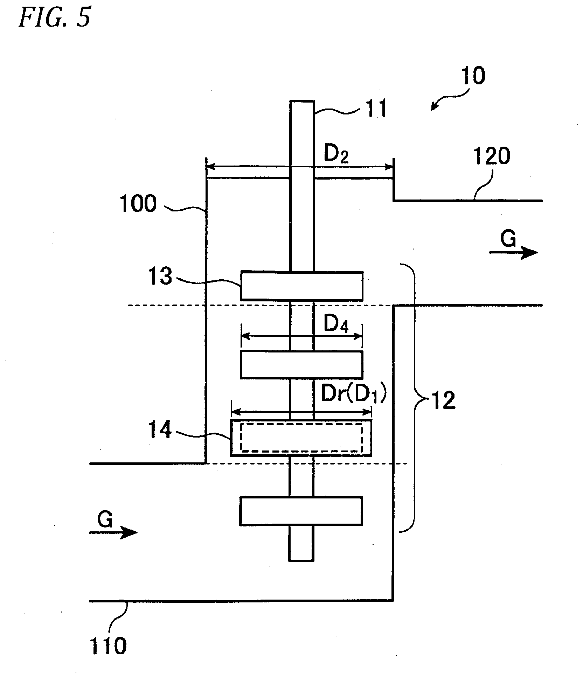

However, in order to exhibit this effect for suppressing slip-through of the molten glass, the molten glass stirring device is needed to satisfy the following conditions in terms of a relationship with the molten glass carried tube within which the molten glass stirring device is disposed. This point is explained by reference to FIG. 5. FIG. 5 is a view showing a state where the molten glass stirring device 10 shown in FIG. 1 is disposed within a molten glass delivery tube.

In FIG. 5, when a maximum diameter of the stirring portion 12 of the molten glass stirring device 10 is defined as $D_1$ (mm), a diameter of the molten glass delivery tube in the site at which the stirring portion 12 is placed, namely the main tube 100, is defined as $D_2$ (mm), and an outer diameter of the ring paddle 14 of the molten glass stirring device 10 is defined as $D_r$ (mm), it is required that the following formulae (1) and (2) are satisfied:

$$0.7 \times D_2 \leq D_1 \leq 0.98 \times D_2 \qquad (1)$$

$$0.8 \times D_1 \leq D_r \leq D_1 \qquad (2)$$

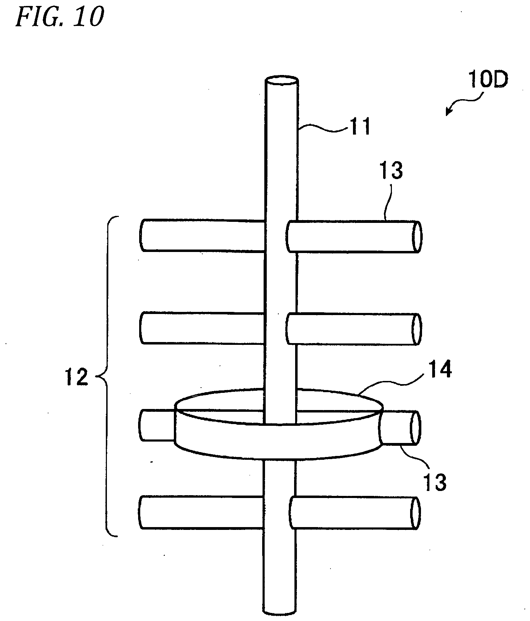

Here, the maximum diameter $D_1$ of the stirring portion 12 coincides with the outer diameter $D_r$ of the ring paddle 14. However, as expressed in the formula (2), the outer diameter $D_r$ of the ring paddle 14 may be made smaller than the maximum diameter $D_1$ of the stirring portion 12. In this case, for example, as in a molten glass stirring device 10D shown in FIG. 10 as described later, the stirring blade 13 is shaped to protrude from the ring paddle 14. In such case, in the stirring portion 12 shown in FIG. 5, a diameter $D_4$ of the site at which the stirring blade 13 is provided becomes the maximum diameter $D_1$ of the stirring potion 12.

In the case where the maximum diameter $D_1$ of the stirring portion 12 is larger than $0.98 \times D_2$, at the time of stirring of the molten glass, there is a concern that the stirring portion 12 comes into contact with the molten glass delivery tube within which the molten glass stirring device 10 is disposed, namely the wall surface of the main tube 100, thereby damaging the wall surface of the molten glass delivery tube made of a platinum material (main tube 100).

On the other hand, in the case where the maximum diameter $D_1$ of the stirring portion 12 is smaller than $0.7 \times D_2$, a pressure loss generated between the stirring portion 12 and the wall surface of the main tube 100 is small, so that the molten glass passing through the vicinity of the wall surface of the main tube 100 (site outside the broken line in FIG. 4) cannot be brought into the stirring region where the stirring portion 12 is provided. For this reason, slip-through of the molten glass cannot be suppressed.

The foregoing $D_1$ and $D_2$ preferably satisfy the following formula (1a), and more preferably satisfy the following formula (1b).

$$0.7 \times D_2 \leq D_1 \leq 0.96 \times D_2 \qquad (1a)$$

$$0.7 \times D_2 \leq D_1 \leq 0.94 \times D_2 \qquad (1b)$$

As described previously, the outer diameter $D_r$ of the ring paddle 14 may be made smaller than the maximum diameter $D_1$ of the stirring portion 12. However, in the case where the outer diameter $D_r$ of the ring paddle 14 is smaller than $0.8 \times D_1$, a pressure loss generated between the ring paddle 14 and the wall surface of the main tube 100 is small, so that the molten glass passing through the vicinity of the wall surface of the main tube 100 (site outside the broken line in FIG. 4) cannot be brought into the stirring region where the stirring portion 12 is provided. For this reason, slip-through of the molten glass cannot be suppressed.

The foregoing $D_1$ and $D_r$ preferably satisfy the following formula (2a), and more preferably satisfy the following formula (2b).

$$0.85 \times D_1 \leq D_r \leq D_1 \qquad (2a)$$

$$0.9 \times D_1 \leq D_r \leq D_1 \qquad (2b)$$

The ring paddle 14 having an annular shape is needed to have strength such that when the molten glass is stirred by the stirring portion 12, the ring paddle 14 is not broken. In order to satisfy this need, in the ring paddle 14, there is a necessary thickness at the minimum. However, when the thickness of the ring paddle 14 is too large, the action to bring the molten glass passing through the vicinity of the wall surface of the main tube 100 (site outside the broken line in FIG. 4) into the stirring region where the stirring portion 12 is provided is lowered, and in addition to that, the flow velocity of the molten glass in the stirring region where the stirring portion 12 is provided becomes large, so that the stirring action of the molten glass is lowered.

For this reason, it is needed to regulate the thickness of the ring paddle 14 to 50 mm or less. The thickness of the ring paddle 14 is more preferably 45 mm or less, and still more preferably 40 mm or less.

From the viewpoint of strength, the thickness of the ring paddle 14 is preferably 3 mm or more, more preferably 5 mm or more, and still more preferably 8 mm or more.

It should be noted that the thickness of the ring paddle 14 refers to a thickness of the annular shape in the diameter direction, namely {(outer diameter) - (inner diameter) }/2 of the ring paddle 14.

Meanwhile, a height of the ring paddle 14 refers to a height in the axial direction of the central axis 11 that is concentric with the ring paddle 14. When the height of the ring paddle 14 is defined as h (mm), and a length of the stirring portion 12 in the axial direction of the central axis 11 is defined as L (mm), the h and L preferably satisfy the following formula (5):

$$0.05 \times L \leq h \leq 0.5 \times L \qquad (5)$$

When the height h of the ring paddle 14 is smaller than 0.05L, a pressure loss generated between the ring paddle 14 and the wall surface of the main tube 100 becomes small, and the molten glass passing through the vicinity of the wall surface of the main tube 100 (site outside the broken line in FIG. 4) cannot be thoroughly brought into the stirring region where the stirring portion 12 is provided, so that there is a concern that slip-through of the molten glass cannot be suppressed.

On the other hand, when the height h of the ring paddle 14 is larger than 0.5L, torque required for rotation of the stirring portion 12 increases.

The h and L more preferably satisfy the following formula (5a), and still more preferably satisfy the following formula (5b).

$$0.05 \times L \leq h \leq 0.4 \times L \qquad (5a)$$

$$0.05 \times L \leq h \leq 0.3 \times L \qquad (5b)$$

The reason why as described previously, in the case of providing the ring paddle 14 in the stirring portion 12, slip-through of the molten glass is suppressed resides in the matter that a pressure loss is generated between the ring paddle 14 provided in the stirring portion 12 and the wall surface of the main tube 100, and the molten glass passing through the vicinity of the wall surface of the main tube 100 (site outside the broken line in FIG. 4) is brought into the stirring region where the stirring portion 12 is provided. In order to exhibit this effect, in the molten glass delivery tube (main tube 100), the ring paddle 14 is preferably provided in a site (within a range shown by top and bottom broken lines in FIG. 5) where the molten glass is carried only in the long axis direction of the central axis of the stirring portion 12.

When a diameter of the central axis 11 of the molten glass stirring device 10 is defined as $D_3$ (mm), even in the case where $D_3$ is large relative to the maximum diameter $D_1$ of the stirring portion 12, the flow velocity of the molten glass in the stirring region where the stirring portion 12 is provided becomes large, and the stirring action of the molten glass is lowered.

For this reason, the foregoing $D_1$ and $D_3$ preferably satisfy the following formula (3), more preferably satisfy the following formula (3a), still more preferably satisfy the following formula (3b), and yet still more preferably satisfy the following formula (3c).

$$D_3 \leq 0.6 \times D_1 \qquad (3)$$

$$D_3 \leq 0.5 \times D_1 \qquad (3a)$$

$$D_3 \leq 0.4 \times D_1 \qquad (3b)$$

$$D_3 \leq 0.3 \times D_1 \qquad (3c)$$

In the stirring portion 12, in the case where a relationship between the diameter $D_4$ of the site where the stirring blade 13 is provided and the maximum diameter $D_1$ of the stirring portion 12 is concerned, in the molten glass stirring device 10 shown in FIG. 5, there is a relationship of ($D_4 < D_1$). Meanwhile, as described previously, in the case where the stirring blade 13 is shaped to protrude from the ring paddle 14 as in the molten glass stirring device 10D shown in FIG. 10 as described later, there is a relationship of ($D_4 = D_1$). In consequence, there is a relationship of ($D_4 \leq D_1$).

However, when the diameter $D_4$ of the site where the stirring blade 13 is provided is smaller than the maximum diameter $D_1$ of the stirring portion 12, the stirring action of the molten glass is lowered. For this reason, the foregoing $D_1$ and $D_4$ preferably satisfy the following formula (4).

$$0.9 \times D_1 \leq D_4 \leq D_1 \qquad (4)$$

The molten glass stirring device according to the present invention has been explained with reference to the drawings. However, the illustrated embodiment is one configuration example of the molten glass stirring device according to the present invention, and it should be construed that the molten glass stirring device according to the present is not limited thereto. Other configuration examples of the molten glass stirring device according to the present invention are further explained with reference to the drawings.

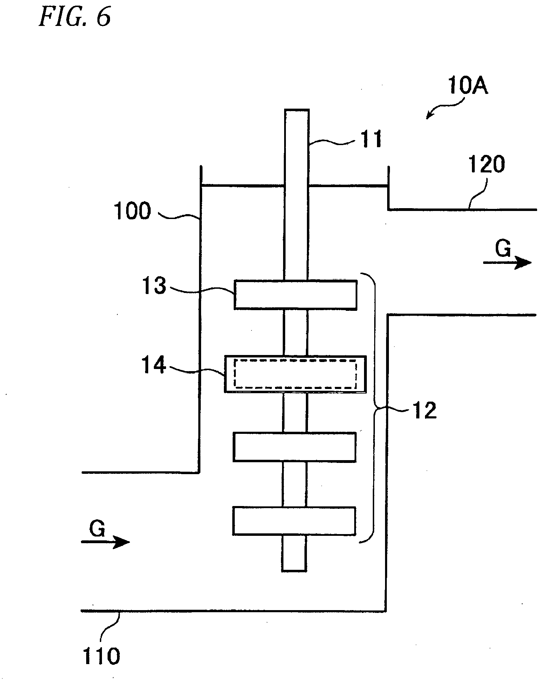

FIG. 6 is a view showing another configuration example of the molten glass stirring device according to the present invention. In the molten glass stirring device 10 shown in FIGs. 1 and 5, the ring paddle 14 is provided in the axial direction of the central axis 11 at a position of the second stirring blade 13 from the bottom, whereas in a molten glass stirring device 10A shown in FIG. 6, the ring paddle 14 is provided in the axial direction of the central axis 11 at a position of the third stirring blade 13 from the bottom. In the molten glass delivery tube (main tube 100), in the case where it is possible to provide the ring paddle 14 in a site (within a range shown by top and bottom broken lines in FIG. 5) where the molten glass is carried only in the long axis direction of the central axis of the stirring portion 12, the ring paddle 14 may be provided in the axial direction of the central axis 11 at a position of the lowermost stirring blade 13 or at a position of the uppermost stirring blade 13.

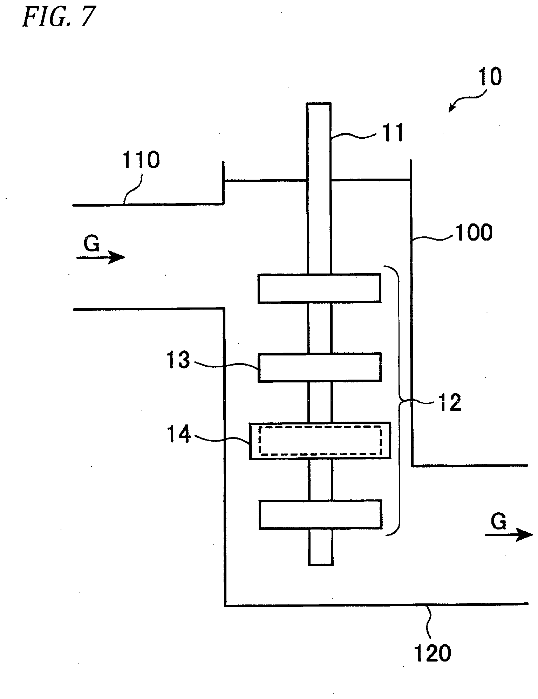

FIG 7 is a view showing another configuration example of the molten glass stirring device according to the present invention. FIG. 7 is different from FIG. 5 with respect to the configuration of the molten glass delivery tube. That is, in FIG. 7, the branch tube 110 on the upstream side is connected to an upper portion of the main tube 100, and the branch tube 120 on the downstream side is connected to a lower portion of the main tube 100; and in the main tube 100 within which the molten glass stirring device 10 is disposed, the molten glass G is carried into the lower portion in the drawing. On the other hand, in FIG. 5, the branch tube 110 on the upstream side is connected to a lower portion of the main tube 100, and the branch tube 120 on the downstream side is connected to an upper portion of the main tube 100; and in the main tube 100 within which the molten glass stirring device 10 is disposed, the molten glass G is carried into the upper portion in the drawing. In all of these embodiments, by providing the ring paddle 14 in the stirring portion 12, the effect for suppressing slip-through of the molten glass is preferably exhibited.

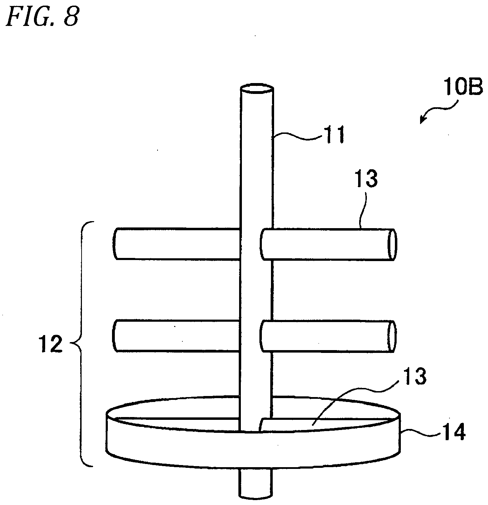

FIG. 8 is a view showing another configuration example of the molten glass stirring device according to the present invention. In a molten glass stirring device 10B shown in FIG. 8, three stirring blades 13 are provided in the axial direction of the central axis 11 at intervals in the vertical direction, and the ring paddle 14 is provided in the axial direction of the central axis 11 at a position of the lowermost stirring blade 13.

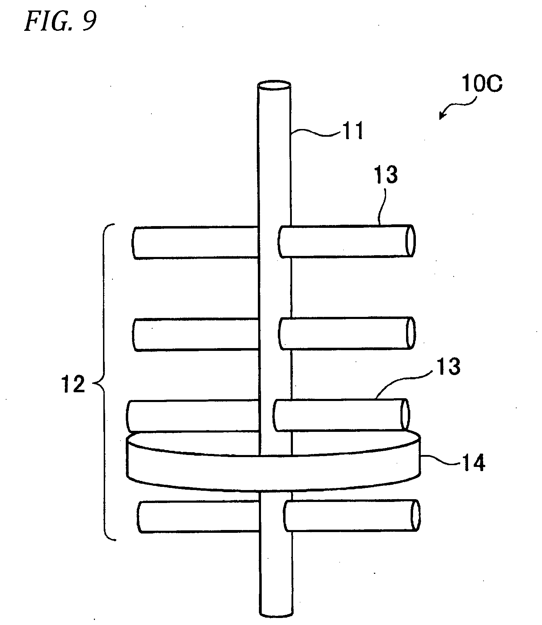

FIG. 9 is a view showing another configuration example of the molten glass stirring device according to the present invention. In the molten glass stirring device 10 shown in FIGs. 1 and 5, the position of the stirring blade 13 coincides with the position of the ring paddle 14 in the axial direction of the central axis 11, and the ring paddle 14 is disposed so as to cover the stirring blade 13. On the other hand, in a molten glass stirring device 10C shown in FIG. 9, the position of the stirring blade 13 does not coincide with the position of the ring paddle 14 in the axial direction of the central axis 11, and the both are disposed at a slightly deviated position from each other. In even such a configuration, by providing the ring paddle 14 in the stirring portion 12, the effect for suppressing slip-through of the molten glass is preferably exhibited.

FIG. 10 is a view showing another configuration example of the molten glass stirring device according to the present invention. In a molten glass stirring device 10D shown in FIG. 10, the diameter of the site at which the stirring blade 13 is provided is larger than the outer diameter of the ring paddle 14, and the stirring blade 13 is shaped to protrude from the ring paddle 14. So long as the foregoing formula (4) is satisfied, such a configuration may be adopted.

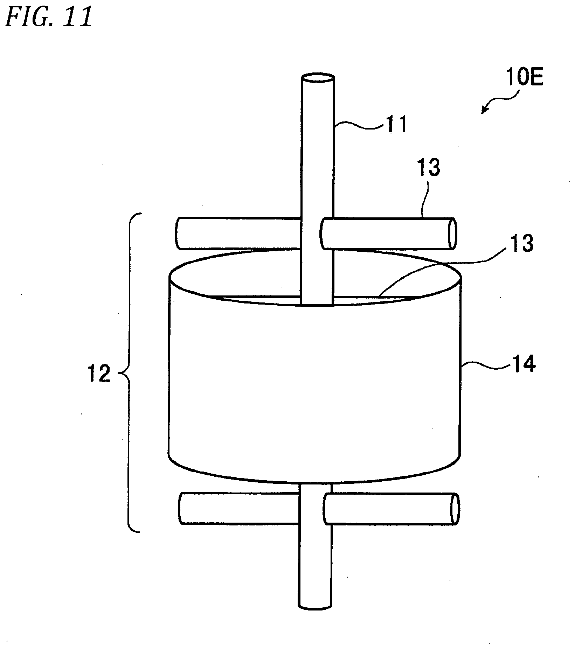

FIG. 11 is a view showing another configuration example of the molten glass stirring device according to the present invention. In the molten glass stirring device 10 shown in FIGs. 1 and 5, the ring paddle 14 is provided so as to cover one stirring blade 13 of the four stirring blades 13 which are provided in the axial direction of the central axis 11 at intervals in the vertical direction, whereas in a molten glass stirring device 10E shown in FIG. 11, the height h of the ring paddle 14 is larger, and the ring paddle 14 covers two stirring blades 13 of the four stirring blades 13 which are provided at intervals in the vertical direction. It should be noted that while the ring paddle 14 may be disposed so as to cover all of the four stirring blades 13 which are provided at intervals in the vertical direction, attention is needed to pay at a point that torque required for rotation of the stirring portion 12 increases.

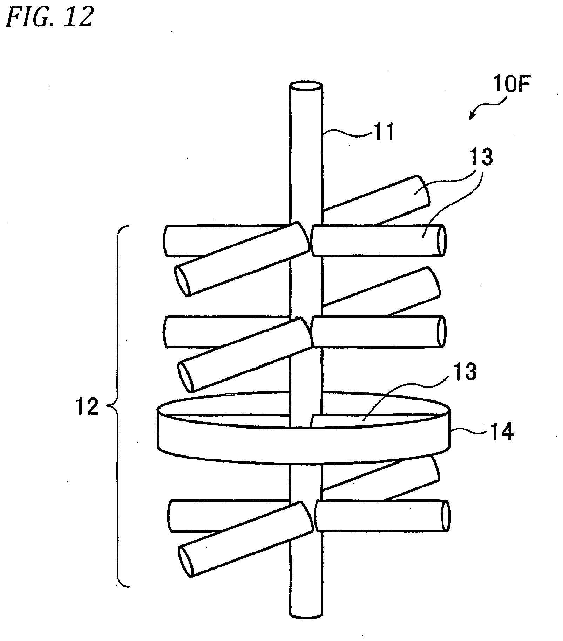

FIG. 12 is a view showing another configuration example of the molten glass stirring device according to the present invention. In the molten glass stirring device 10 shown in FIGs. 1 and 5, the two stirring blades 13 are provided in the circumferential direction of the central axis 11 such that they are opposed to each other across the central axis 11, whereas in a molten glass stirring device 10F shown in FIG. 12, four stirring blades 13 are provided in the circumferential direction of the central axis 11 so as to form a cross centering on the central axis 11. In the drawing, the stirring blades 13 in the left and right direction and the stirring blades 13 in the near-side direction and the far-side direction in the drawing have the same length; however, these two sets of stirring blades may be different in the length from each other. For example, the length of each of the stirring blades 13 in the left and right direction may be made identical to an inner radius of the ring paddle 14, whereas the length of each of the stirring blades 13 in the near-side direction and the far-side direction in the drawing may be made smaller than the former.

FIG. 13 is a view showing another configuration example of the molten glass stirring device according to the present invention. In a molten glass stirring device 10G shown in FIG. 13, the stirring portion 12 further includes, in addition to the stirring blades 13 and 15 and the ring paddle 14, a perpendicular stirring blade 16 composed of a plate-like body, a long side of which is parallel to the central axis 11, the perpendicular stirring blade 16 being provided at a position of specifying an outer edge of the stirring portion 12. In other words, the stirring blades 13 are positioned between the parallel central axis 11 and the perpendicular stirring blade 16. The uppermost stirring blade 15 and the lowermost stirring blade 15 also function as a supporting member of the perpendicular stirring blade 16 in the axial direction of the central axis 11.

It should be noted that in the molten glass stirring device 10G shown in FIG. 13, the stirring blades 13 and 15 are composed of a plate-like body.

In the molten glass stirring device 10G shown in FIG. 13, the perpendicular stirring blade 16 provided in the stirring portion 12 is expected to exhibit the effect for suppressing slip-through of the molten glass together with the ring paddle 14.

It should be noted that in the molten glass stirring device 10G shown in FIG. 13, while the perpendicular stirring blade 16 is shown as a plate-like body, the shape of the perpendicular stirring blade is not limited thereto, and it may also be a rod-like body whose vertical cross-sectional shape is a circle, an ellipse, or a polygon, such as a triangle, a quadrilateral, a hexagon, etc. In these cases, a long axis of the rod-like body is made parallel to the central axis 11.

In addition, in the molten glass stirring device 10G shown in FIG. 13, two perpendicular stirring blades 16 are provided such that the stirring blades 13 and 15 are positioned between the central axis 11 and the perpendicular stirring blade 16; however, in the case where as in the molten glass stirring device 10F shown in FIG. 12, the four stirring blades 13 are provided in the circumferential direction of the central axis 11 so as to form a cross centering on the central axis 11, additional two perpendicular stirring blades, namely four perpendicular stirring blades in total, may be provided such that the stirring blades 13 in the near-side direction and the far-side direction in the drawing are positioned between the central axis 11 and the perpendicular stirring blade.

FIG. 14 is a view showing another configuration example of the molten glass stirring device according to the present invention. In a molten glass stirring device 10H shown in FIG. 14, in the central axis 11, a portion of the stirring portion 12 provided with the stirring blade 13 and the ring paddle 14 forms a diameter-expanded portion 17. In the circumference of the diameter-expanded portion 17, three stirring blades 13 are provided in the axial direction of the central axis 11 at intervals in the vertical direction, and six stirring blades 13 are provided in the circumferential direction of the central axis 11.

It should be noted that in the molten glass stirring device 10H shown in FIG. 14, the stirring blade 13 is composed of a plate-like body.

It should be noted that constitutional materials of the respective configuration elements of the molten glass stirring device according to the present invention, namely, the central axis, the stirring blade, and the ring paddle, and furthermore, the perpendicular stirring blade 16 in the case of the molten glass stirring device 10G shown in FIG 13, are not particularly limited so long as they are a material having heat resistance to the molten glass and corrosion resistance. It is preferred to use platinum or platinum-rhodium alloy with excellent heat resistance. In addition, in order to improve the strength, a material obtained by using molybdenum having a high melting point as a core material, coating alumina on this molybdenum core material, and covering platinum or platinum-rhodium alloy thereon, or the like can also be used.

Next, the sheet glass manufacturing apparatus according to the present invention is explained. The sheet glass manufacturing apparatus includes, as a minimum configuration, a glass melting apparatus for melting glass raw materials to form molten glass, a sheet glass forming apparatus for forming the molten glass to form a sheet glass (for example, a forming apparatus by the float method or the down-draw method), and a molten glass delivery tube which is provided between the glass melting apparatus and the sheet glass forming apparatus for the purpose of carrying the molten glass obtained by the glass melting apparatus into the sheet glass forming apparatus. The sheet glass manufacturing apparatus usually includes other configuration elements than the glass melting apparatus and the sheet glass forming apparatus. Examples of such other configuration elements include a defoaming apparatus for carrying out clarification of the molten glass. Then, the sheet glass manufacturing apparatus usually includes plural molten glass delivery tubes for the purpose of carrying the molten glass between these configuration elements. In the sheet glass manufacturing apparatus according to the present invention, the above-described glass stirring device according to the present invention is placed in any one or plurality of these plurally existing molten glass delivery tubes. In the sheet glass manufacturing apparatus according to the present invention, the position at which the glass stirring device according to the present invention is placed is not particularly limited. In consequence, the glass stirring device according to the present invention may be provided in any of the molten glass delivery tubes configuring the sheet glass manufacturing apparatus. In addition, the number of the glass stirring devices to be placed is not particularly limited. However, in the case where the sheet glass manufacturing apparatus includes a defoaming apparatus as the configuration element, in view of manufacturing a sheet glass with high homogeneity, it is preferred to place the glass stirring device according to the present invention in the molten glass delivery tube on the downstream side of the defoaming apparatus. This is because with respect to the molten glass passing through the defoaming apparatus, heterogeneity is apt to occur on the surface thereof, and hence, a homogenizing effect by the molten glass stirring device according to the present invention is high.

While the sheet glass manufacturing apparatus according to the present invention is applicable to manufacture of sheet glasses of various applications, it is especially preferred to apply the sheet glass manufacturing apparatus according to the present invention to manufacture of a sheet glass of an application in which the requirement for homogeneity is extremely strict as in glass substrates for FPD.

By manufacturing a sheet glass using the sheet glass manufacturing apparatus according to the present invention, sheet glasses that are free from inclusion of unmelted raw materials and have high optical homogeneity and high flatness are obtainable.

EXAMPLES

In the present Examples, a behavior of molten glass to be carried within a molten glass delivery tube was evaluated by means of simulation.

In the present Examples, a behavior of the case shown in FIG. 3, namely a molten glass flow within the molten glass delivery tube having the molten glass stirring device 20 shown in FIG. 2 disposed therein, and a behavior of the case shown in FIG. 4, namely a molten glass flow within the molten glass delivery tube having the molten glass stirring device 10 shown in FIG. 1 disposed therein were evaluated. However, in order to clarify a difference due to the presence or absence of the ring paddle 14, with respect to the ring paddle 14 and the stirring blade 13 placed in the inside of the ring paddle 14 in the molten glass stirring device 10 shown in FIG.4 as well as the stirring blade 23 placed at the same position as the ring paddle of the molten glass stirring device 10 in the axial direction of the central axis 21 in the molten glass stirring device 20 shown in FIG. 3, the behavior of a molten glass flow passing through the inside of the molten glass delivery tube (main tube 100) was evaluated. FIG. 15 is a view showing a positional relationship between the stirring blade 23 and the wall surface of the molten glass delivery tube 100 in the case where a ring paddle is not existent; and FIG. 16 is a view showing a positional relationship among the stirring blade 13, the ring paddle 14, and the wall surface of the molten glass delivery tube 100 in the case where a ring paddle is existent.

In addition, viscosity of the molten glass to be carried within the molten glass delivery tube (main tube 100) was supposed to be 400 dPa·s, and its carrying amount was supposed to be 55 $m^3$/hr·S.

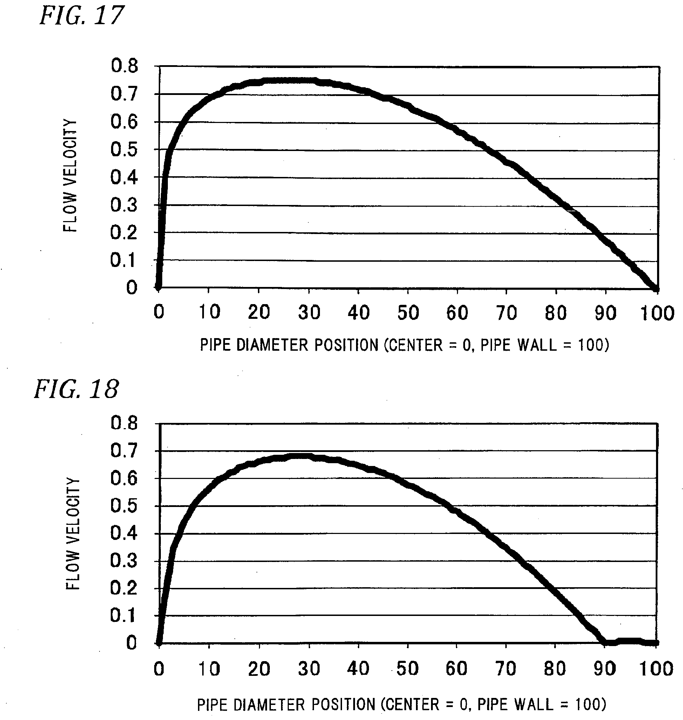

In order to exclude any influence to be caused due to a difference in dimensions of each of the molten glass delivery tube, the stirring blade, and the ring paddle, a relative ratio (r/R) of a length r of the stirring blade 23 (in the case of the configuration shown in FIG. 15; a length r of the ring paddle 14 in the case of the configuration shown in FIG. 16) corresponding to the maximum diameter of the stirring portion to an inner diameter R of the molten glass delivery tube 100 was defined as a decision index. FIGs. 17 to 20 as explained below are concerned with the results in the case of supposing r/R to be 0.9 (90%).

FIG. 17 is a graph showing a relationship between a position in the tube diameter direction (tube diameter position) and a flow velocity distribution of the molten glass flow in the circumferential direction of the molten glass delivery tube in the configuration shown in FIG. 15; and FIG. 18 is a graph showing a relationship between a position in the tube diameter direction (tube diameter position) and a flow velocity distribution of the molten glass flow in the circumferential direction of the molten glass delivery tube in the configuration shown in FIG. 16. As is evident from comparison between the both, in FIG. 18, in a non-stirring region outside the ring paddle 14 (site outside the broken line in FIG. 4), the flow velocity distribution of the molten glass flow is substantially 0, so that it can be confirmed that slip-through of the molten glass is greatly suppressed.

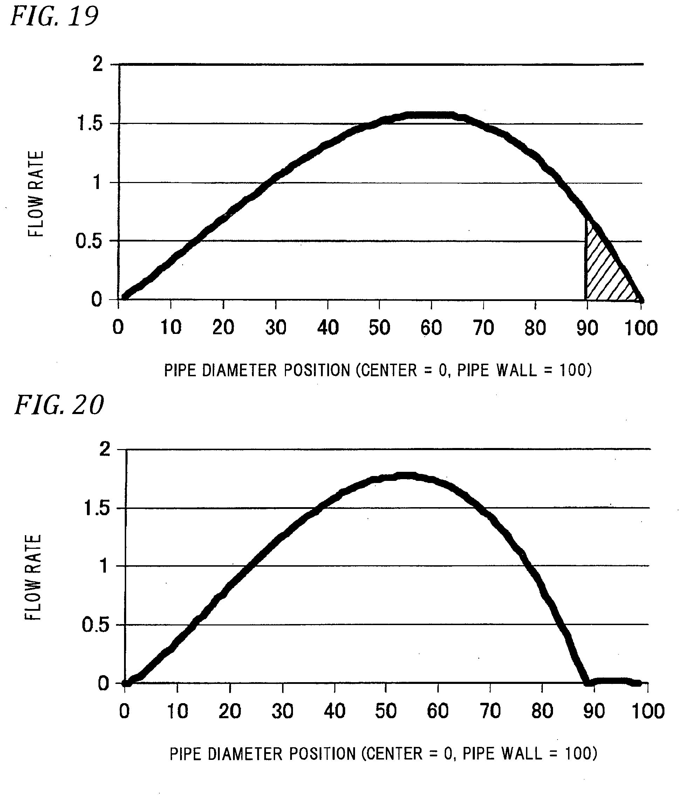

FIG. 19 is a graph showing a relationship between a position in the tube diameter direction (tube diameter position) and a flow rate distribution of a molten glass flow in the axial direction of the molten glass delivery tube in the configuration shown in FIG. 15; and FIG. 20 is a graph showing a relationship between a position in the tube diameter direction (tube diameter position) and a flow rate distribution of the molten glass flow in the axial direction of the molten glass delivery tube in the configuration shown in FIG. 16. As is evident from comparison between the both, in FIG. 20, in a non-stirring region outside the ring paddle 14 (site outside the broken line in FIG. 4), the flow rate distribution of the molten glass flow is substantially 0, so that it can be confirmed that slip-through of the molten glass is greatly suppressed. It should be noted that in FIG 19, an area shown by a hatching is corresponding to the flow rate distribution of the molten glass passing through a non-stirring region outside the stirring blade 23 (site outside the broken line in FIG. 3), namely slip-through of the molten glass. A ratio of the molten glass passing through the non-stirring region (non-stirring region passing ratio) was 4.2% in FIG. 19, whereas it was decreased to 0.2% in FIG 20.

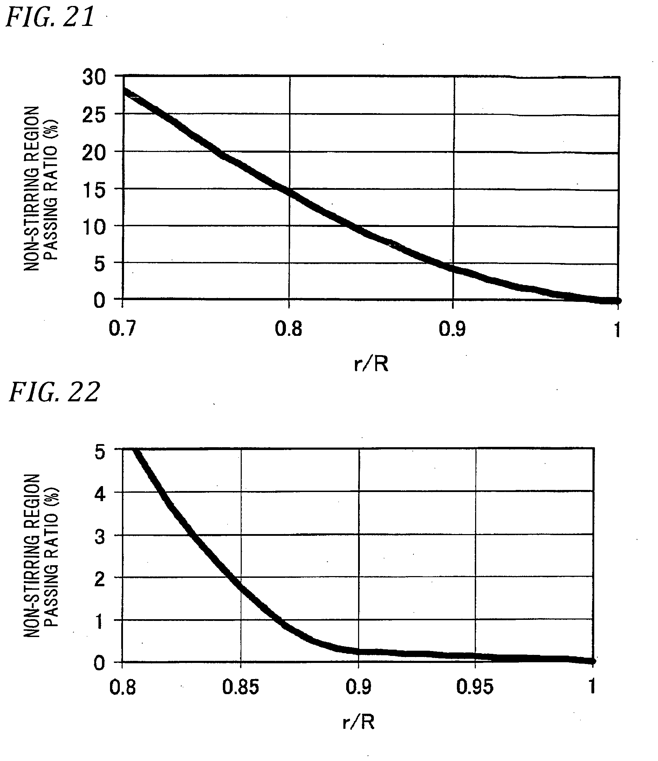

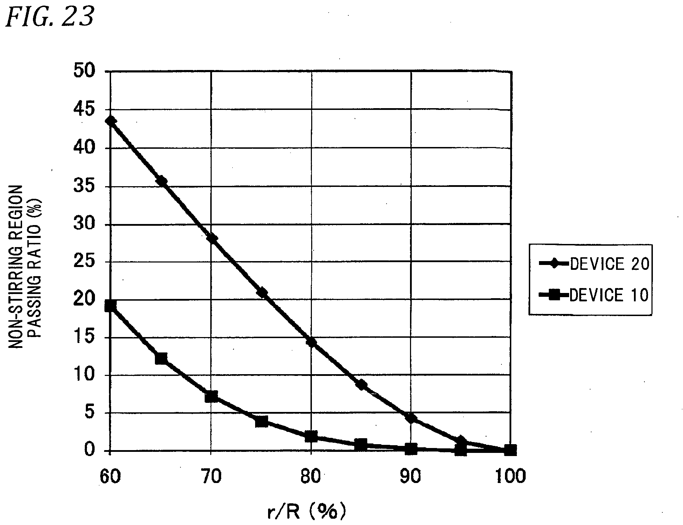

Furthermore, with respect to each of the configurations shown in FIGs. 15 and 16, a relationship with the non-stirring region passing ratio was evaluated while varying r/R. FIG. 21 is a graph showing a relationship between r/R and a non-stirring region passing ratio in the configuration shown in FIG 15; and FIG 22 is a graph showing a relationship between r/R and a non-stirring region passing ratio in the configuration shown in FIG. 16. In addition, FIG. 23 is a graph comparing a relationship between r/R and a non-stirring region passing ratio with respect to the configurations shown in FIG. 15 and FIG. 16. In FIG. 23, the configuration shown in FIG. 15 is concerned with the device 20, and the configuration shown in FIG. 16 is concerned with the device 10. As is evident from these results, particularly the results shown in FIG. 23, in the case where r/R is defined as 0.7 (70%) or more in the configuration shown in FIG. 16, the non-stirring region passing ratio can be made lower as compared with the case where r/R is defined as 0.9 (90%) in the configuration shown in FIG. 15.

DESCRIPTION OF REFERENCE NUMERALS

10, 10A, 10B, 10C, 10D, 10E, 10F, 10G, 10H, 20: Molten glass stirring device
11, 21: Central axis
12, 22: Stirring portion
13, 23, 15: Stirring blade
14: Ring paddle
16: Perpendicular stirring blade
17: Diameter-expanded portion
100: Molten glass delivery tube (main tube)
110, 120: Molten glass delivery tube (branch tube)

**Claims**

**1.** A sheet glass manufacturing apparatus comprising:

a glass melting apparatus;
a sheet glass forming apparatus; and
a molten glass delivery tube provided between the glass melting apparatus and the sheet glass forming apparatus, wherein

the molten glass delivery tube is provided with at least one molten glass stirring device (10, 10A - 10H); the molten glass stirring device (10, 10A - 10H) that stirs molten glass includes a rotatable central axis (11) and a stirring portion (12) provided on the central axis (11);

the stirring portion (12) includes a stirring blade (13, 15), a long axis of which is orthogonal to the central axis (11), and which is composed of a plate-like body or a rod-like body whose vertical cross-sectional shape is any one of a circle, an ellipse, and a polygon, and a ring paddle (14) having an annular shape, which is concentric with the central axis (11);

the stirring portion (12) is provided with two or more stirring blades (13, 15) in the axial direction of the central axis (11) and also provided with two or more stirring blades (13, 15) in the circumferential direction of the central axis (11);

the stirring portion (12) is provided with one or more ring paddles (14) in the axial direction of the central axis (11); and

wherein when a maximum diameter of the stirring portion (12) is defined as $D_1$ (mm), a diameter of the molten glass delivery tube in the site at which the stirring portion (12) is placed is defined as $D_2$ (mm), and an outer diameter of the ring paddle (14) is defined as $D_r$ (mm), the following formulae (1) and (2) are satisfied:

$$0.7 \times D_2 \le D_1 \le 0.98 \times D_2 \qquad (1)$$

$$0.8 \times D_1 \le D_r \le D_1 \qquad (2).$$

2. The sheet glass manufacturing apparatus according to claim 1, wherein a thickness of the ring paddle (14) is 50 mm or less.

3. The sheet glass manufacturing apparatus according to claim 1 or 2, wherein the molten glass stirring device (10, 10A - 10H) stirs molten glass having viscosity of 100 to 7,000 dPa·s within the molten glass delivery tube for carrying the molten glass at a carrying amount of 1 to 50 $m^3/hr \cdot S$, whereby S is a cross-sectional area of the delivery tube.

4. The sheet glass manufacturing apparatus according to any one of claims 1 to 3, wherein the ring paddle (14) is provided in a site where the molten glass is carried only in the long axis direction of the central axis (11) of the stirring portion (12) in the molten glass delivery tube, and/or
wherein when a diameter of the central axis (11) is defined as $D_3$ (mm), the following formula (3) is satisfied:

$$D_3 \le 0.6 \times D_1 \qquad (3)$$

5. The sheet glass manufacturing apparatus according to any one of claims 1 to 5, wherein when in the stirring portion (12), a diameter of a site where the stirring blade (13, 15) is provided is defined as $D_4$, the following formula (4) is satisfied:

$$0.9 \times D_1 \le D_4 \le D_1 \qquad (4)$$

6. The sheet glass manufacturing apparatus according to any one of claims 1 to 5, wherein a distance between the two or more stirring blades (13, 15) provided in the axial direction of the central direction is 50 to 200 mm.

7. The sheet glass manufacturing apparatus according to any one of claims 1 to 6, wherein when a length of the stirring portion (12) in the axial direction of the central axis (11) is defined as L (mm), and a height of the ring paddle (14) in the axial direction of the central axis (11) is defined as h (mm), the following formula (5) is satisfied:

$$0.05 \times L \le h \le 0.5 \times L \qquad (5)$$

8. The sheet glass manufacturing apparatus according to any one of claims 1 to 7, wherein the stirring blade (13, 15) is composed of a plate-like body, an angle $\theta$ formed between the short axis of the plate-like body and the central axis (11) satisfies the following formula (6):

$$0° \le \theta \le 60° \qquad (6)$$

9. The sheet glass manufacturing apparatus according to any one of claims 1 to 8, wherein the stirring portion (12) is composed of a plate-like body or a rod-like body whose vertical cross-sectional shape is any one of a circle, an ellipse, and a polygon, and the stirring portion (12) further includes a perpendicular stirring blade (16), a long side or long axis of which is parallel to the central axis (11), the perpendicular stirring blade (16) being provided at a position of specifying an outer edge of the stirring portion (12).

10. The sheet glass manufacturing apparatus according to any one of claims 1 to 9, wherein a defoaming apparatus provided between the glass melting apparatus and the sheet glass forming apparatus is further included; the molten glass delivery tube includes a first molten glass delivery tube provided between the glass melting apparatus and the defoaming apparatus and a second molten glass delivery tube provided between the defoaming apparatus and the sheet glass forming apparatus; and the second molten glass delivery tube is provided with at least the molten glass stirring apparatus.

11. A sheet glass manufacturing method using the sheet glass manufacturing apparatus according to any one of claims 1 to 10.

**Patentansprüche**

1. Eine Vorrichtung zur Herstellung von Flachglas, die das Folgende umfasst:

   einen Glasschmelzapparat;
   eine Flachglasformvorrichtung; und
   ein Abgaberohr für geschmolzenes Glas, das zwischen dem Glasschmelzapparat und der Flachglasformvorrichtung vorgesehen ist, wobei:

   das Abgaberohr für geschmolzenes Glas mit mindestens einer Rührvorrichtung (10, 10A - 10H) für geschmolzenes Glas versehen ist;
   die Glas-Rührvorrichtung (10, 10A - 10H), die geschmolzenes Glas rührt, eine drehbare Mittelachse (11) und einen auf der Mittelachse (11) vorgesehenen Rührabschnitt (12) aufweist;
   der Rührabschnitt (12) ein Rührblatt (13, 15) enthält, von dem eine lange Achse orthogonal zur Mittelachse (11) ist, und das aus einem plattenförmigen Körper oder einem stabförmigen Körper besteht, dessen vertikale Querschnittsform irgendeine der Folgenden sein kann: ein Kreis, eine Ellipse und ein Polygon, und ein Ringpaddel (14) mit einer ringförmigen Form, die konzentrisch zur Mittelachse (11) ist;
   der Rührabschnitt (12) in axialer Richtung der Mittelachse (11) mit zwei oder mehreren Rührblättern (13, 15) und in Umfangsrichtung der Mittelachse (11) mit zwei oder mehreren Rührblättern (13, 15) versehen ist;
   der Rührabschnitt (12) in axialer Richtung der Mittelachse (11) mit einem oder mehreren Rührblättern (14) versehen ist; und
   wobei, wenn ein maximaler Durchmesser des Rührabschnitts (12) als $D_1$ (mm) definiert ist, ein Durchmesser des Abgaberohrs für geschmolzenes Glas an der Stelle, an der der Rührabschnitt (12) angeordnet ist, als $D_2$ (mm) definiert ist, und ein Außendurchmesser des Ringpaddels (14) als $D_r$ (mm) definiert ist, die folgenden Formeln (1) und (2) erfüllt sind:

$$0{,}7 \times D_2 \leq D_1 \leq 0{,}98 \times D_2 \qquad (1)$$

$$0{,}8 \times D_1 \leq D_r \leq D_1 \qquad (2).$$

2. Die Vorrichtung zur Herstellung von Flachglas nach Anspruch 1, wobei eine Dicke des Ringblatts (14) 50 mm oder weniger beträgt.

3. Die Vorrichtung zur Herstellung von Flachglas nach Anspruch 1 oder 2, wobei die Glas-Rührvorrichtung (10, 10A - 10H) geschmolzenes Glas rührt, das innerhalb des Abgaberohrs für geschmolzenes Glas eine Viskosität von 100 bis 7.000 dPa·s aufweist, um das geschmolzene Glas bei einer Beförderungsmenge von 1 bis 50 m³/hr·S zu befördern, wobei S eine Querschnittsfläche des Abgaberohres ist.

4. Die Vorrichtung zur Herstellung von Flachglas nach irgendeinem der Ansprüche von 1 bis 3, wobei das Ringpaddel (14) an einer Stelle bereitgestellt wird, an der das geschmolzene Glas nur in der langen Achse der Mittelachse (11) des Rührabschnitts (12) im Abgaberohr für geschmolzenes Glas gefördert wird, und/oder wobei, wenn ein Durchmesser der Mittelachse (11) als $D_3$ (mm) definiert ist, die folgende Formel (3) erfüllt ist:

$$D_3 \leq 0{,}6 \times D_1 \qquad\qquad (3)$$

5. Die Vorrichtung zur Herstellung von Flachglas nach irgendeinem der Ansprüche von 1 bis 5, wobei, wenn im Rührabschnitt (12) ein Durchmesser einer Stelle, an der das Rührblatt (13, 15) vorgesehen ist, als $D_4$ definiert ist, die folgende Formel (4) erfüllt ist:

$$0{,}9 \times D_1 \leq D_4 \leq D_1 \qquad\qquad (4)$$

6. Die Vorrichtung zur Herstellung von Flachglas nach irgendeinem der Ansprüche von 1 bis 5, wobei ein Abstand zwischen den beiden oder mehreren Rührblättern (13, 15) in axialer Richtung der mittleren Richtung 50 bis 200 mm beträgt.

7. Die Vorrichtung zur Herstellung von Flachglas nach irgendeinem der Ansprüche von 1 bis 6, wobei, wenn eine Länge des Rührabschnitts (12) in axialer Richtung der Mittelachse (11) als L (mm) definiert ist und eine Höhe des Ringpaddels (14) in axialer Richtung der Mittelachse (11) als h (mm) definiert ist, die folgende Formel (5) erfüllt ist:

$$0{,}05 \times L \leq h \leq 0{,}5 \times L \qquad\qquad (5)$$

8. Die Vorrichtung zur Herstellung von Flachglas nach irgendeinem der Ansprüche von 1 bis 7, wobei das Rührblatt (13, 15) aus einem plattenförmigen Körper besteht, wobei ein Winkel $\theta$ zwischen der kurzen Achse des plattenförmigen Körpers und der Mittelachse (11) der folgenden Formel (6) entspricht:

$$0° \leq \theta \leq 60° \qquad\qquad (6)$$

9. Die Vorrichtung zur Herstellung von Flachglas nach irgendeinem der Ansprüche von 1 bis 8, wobei der Rührabschnitt (12) aus einem plattenförmigen Körper oder einem stabförmigen Körper besteht, dessen vertikale Querschnittsform irgendeine der Folgenden sein kann: ein Kreis, eine Ellipse und ein Polygon ist, und wobei der Rührabschnitt (12) ferner ein senkrechtes Rührblatt (16) aufweist, dessen lange Seite oder lange Achse parallel zur Mittelachse (11) ist, wobei das senkrechte Rührblatt (16) an einer Stelle vorgesehen ist, die eine äußere Kante des Rührabschnitts (12) festlegt.

10. Die Vorrichtung zur Herstellung von Flachglas nach irgendeinem der Ansprüche von 1 bis 9, wobei ferner eine Entschäumungs-Vorrichtung enthalten ist, die zwischen dem Glasschmelzgerät und der Vorrichtung zur Herstellung von Flachglas vorgesehen ist; wobei das Abgaberohr für geschmolzenes Glas ein erstes Abgaberohr für geschmolzenes Glas beinhaltet, das zwischen der Vorrichtung zum Schmelzen von Glas und der Vorrichtung zum Entschäumen vorgesehen ist, und ein zweites Abgaberohr für geschmolzenes Glas, das zwischen der Vorrichtung zum Entschäumen und der Vorrichtung zur Herstellung von Flachglas vorgesehen ist; und wobei das zweite Abgaberohr für geschmolzenes Glas zumindest mit der Vorrichtung zum Rühren von geschmolzenem Glas versehen ist.

11. Ein Verfahren zur Herstellung von Flachglas unter Verwendung der Vorrichtung zur Herstellung von Flachglas nach irgendeinem der Ansprüche von 1 bis 10.

**Revendications**

1. Un appareil de fabrication de feuilles de verre comprenant :

   un appareil de fusion de verre ;
   un appareil de formage de feuilles de verre ; et

un tube d'amenée de verre fondu fourni entre l'appareil de fusion de verre et l'appareil de formage de feuilles de verre, sachant que :

le tube d'amenée de verre fondu est muni d'au moins un dispositif d'agitation de verre fondu (10, 10A - 10H) ;

le dispositif d'agitation de verre fondu (10, 10A - 10H) qui agite du verre fondu inclut un axe central rotatif (11) et une portion d'agitation (12) prévue sur l'axe central (11) ;

la portion d'agitation (12) comprend une lame d'agitation (13, 15), dont un axe long est orthogonal à l'axe central (11), et qui est composé d'un corps en forme de plaque ou de tige dont la forme en coupe transversale verticale est l'une quelconque parmi un cercle, une ellipse et un polygone, et une pale annulaire (14) de forme annulaire, qui est concentrique avec l'axe central (11) ;

la portion d'agitation (12) est munie de deux ou plusieurs lames d'agitation (13, 15) dans la direction axiale de l'axe central (11) et munie également de deux ou plusieurs lames d'agitation (13, 15) dans la direction circonférentielle de l'axe central (11) ;

la portion d'agitation (12) est munie d'une ou plusieurs pales annulaires (14) dans la direction axiale de l'axe central (11) ; et

sachant que, lorsqu'un diamètre maximal de la portion d'agitation (12) est défini comme $D_1$ (mm), un diamètre du tube d'amenée de verre fondu dans le site où est placée la portion d'agitation (12) est défini comme $D_2$ (mm), et un diamètre extérieur de la pale annulaire (14) est défini comme $D_r$ (mm), les formules (1) et (2) suivantes sont satisfaites :

$$0{,}7 \times D_2 \le D_1 \le 0{,}98 \times D_2 \qquad (1)$$

$$0{,}8 \times D_1 \le D_r \le D_1 \qquad (2).$$

2. L'appareil de fabrication de feuilles de verre d'après la revendication 1, sachant qu'une épaisseur de la pale annulaire (14) est de 50 mm ou moins.

3. L'appareil de fabrication de feuilles de verre d'après la revendication 1 ou 2, sachant que le dispositif d'agitation de verre fondu (10, 10A - 10H) agite du verre fondu présentant une viscosité de 100 à 7.000 dPa·s à l'intérieur du tube d'amenée de verre fondu pour amener le verre fondu à une portée (*carrying amount*) de de 1 à 50 m³/hr·S, S étant une section transversale du tube d'amenée.

4. L'appareil de fabrication de feuilles de verre d'après l'une quelconque des revendications de 1 à 3, sachant que la pale annulaire (14) est fournie dans un site où le verre fondu n'est porté que dans la direction d'axe long de l'axe central (11) de la portion d'agitation (12) dans le tube d'amenée de verre fondu, et/ou sachant que, lorsqu'un diamètre de l'axe central (11) est défini comme $D_3$ (mm), la formule (3) suivante est satisfaite :

$$D_3 \le 0{,}6 \times D_1 \qquad (3)$$

5. L'appareil de fabrication de feuilles de verre d'après l'une quelconque des revendications de 1 à 5, sachant que, lorsque dans la portion d'agitation (12), un diamètre d'un site où la lame d'agitation (13, 15) est prévue, est défini comme $D_4$, la formule suivante (4) est satisfaite :

$$0{,}9 \times D_1 \le D_4 \le D_1 \qquad (4)$$

6. L'appareil de fabrication de feuilles de verre d'après l'une quelconque des revendications de 1 à 5, sachant qu'une distance entre les deux ou plusieurs lames d'agitation (13, 15) prévues dans la direction axiale de la direction centrale est de 50 à 200 mm.

7. L'appareil de fabrication de feuilles de verre d'après l'une quelconque des revendications de 1 à 6, sachant que, lorsqu'une longueur de la portion d'agitation (12) dans la direction axiale de l'axe central (11) est définie comme L (mm) et qu'une hauteur de la pale annulaire (14) dans la direction axiale de l'axe central (11) est définie comme h (mm), la formule suivante (5) est satisfaite :

$$0{,}05 \times L \leq h \leq 0{,}5 \times L \qquad\qquad (5)$$

**8.** L'appareil de fabrication de feuilles de verre d'après l'une quelconque des revendications de 1 à 7, sachant que la lame d'agitation (13, 15) est composée d'un corps en forme de plaque, un angle θ formé entre l'axe court du corps en forme de plaque et l'axe central (11) satisfait à la formule (6) suivante :

$$0° \leq \theta \leq 60° \qquad\qquad (6)$$

**9.** L'appareil de fabrication de feuilles de verre d'après l'une quelconque des revendications de 1 à 8, sachant que la portion d'agitation (12) est composée d'un corps en forme de plaque ou de tige dont la forme en coupe transversale verticale est l'une quelconque parmi un cercle, une ellipse et un polygone, et que la portion d'agitation (12) comprend en outre une lame d'agitation perpendiculaire (16), dont un côté long ou un axe long est parallèle à l'axe central (11), la lame d'agitation perpendiculaire (16) étant prévue à une position spécifiant un bord extérieur de la portion d'agitation (12).

**10.** L'appareil de fabrication de verre en feuille d'après l'une quelconque des revendications de 1 à 9, sachant qu'un appareil de démoussage prévu entre l'appareil de fusion de verre et l'appareil de formation de verre en feuille est en outre inclus ; que le tube d'amenée de verre fondu inclut un premier tube d'amenée de verre fondu prévu entre l'appareil de fusion de verre et l'appareil de démoussage et un deuxième tube d'amenée de verre fondu prévu entre l'appareil de démoussage et l'appareil de formation de verre en feuille ; et que le deuxième tube d'amenée de verre fondu est pourvu d'au moins l'appareil d'agitation de verre fondu.

**11.** Un procédé de fabrication de feuilles de verre utilisant l'appareil de fabrication de feuilles de verre d'après l'une quelconque des revendications de 1 à 10.

FIG. 1

FIG. 2

FIG. 3

*FIG. 4*

*FIG. 5*

*FIG. 6*

FIG. 7

*FIG. 8*

FIG. 9

*FIG. 10*

*FIG. 11*

FIG. 12

FIG. 13

*FIG. 14*

*FIG. 15*

*FIG. 16*

## FIG. 17

PIPE DIAMETER POSITION (CENTER = 0, PIPE WALL = 100)

## FIG. 18

PIPE DIAMETER POSITION (CENTER = 0, PIPE WALL = 100)

*FIG. 19*

PIPE DIAMETER POSITION (CENTER = 0, PIPE WALL = 100)

*FIG. 20*

PIPE DIAMETER POSITION (CENTER = 0, PIPE WALL = 100)

## FIG. 21

## FIG. 22

*FIG. 23*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008101649 A2
- US 2012180529 A1
- JP 2001072426 A
- JP 200363829A A